# FASCICULE DE BREVET EUROPEEN

(11) **EP 0 611 909 B1**
(45) Date de publication et mention de la délivrance du brevet: **16.05.2001**
(21) Numéro de dépôt: 94400328.4
(22) Date de dépôt: 15.02.1994
(51) Int. Cl.: F16L 19/08, F16L 33/22, F16L 19/06

(54) **Dispositif de raccord etanche**
Flüssigkeitsdichte Verbindungsvorrichtung
Fluid-tight coupling device

(30) Priorité: 16.02.1993 FR 9301708
(43) Date de publication de la demande: 24.08.1994
(73) Titulaire: POMPES SALMSON Société Anonyme à directoire dite:, 92504 Rueil Malmaison (FR)
(72) Inventeur: Pottier, Xavier, F-53260 Montigne-le-Brillant (DE)
(74) Mandataire: Hirsch, Marc-Roger

(56) Documents cités:
- CH-A- 184 949
- DE-U- 1 685 048
- DE-U- 8 629 297
- FR-A- 1 556 413
- GB-A- 895 461
- GB-A- 1 229 675
- US-A- 3 058 762

## Description

La présente invention s'applique à un dispositif de raccord pour liaison étanche entre un tube à surface extérieure cylindrique et un corps de raccord rigide muni de moyens extérieurs de retenue.

Il existe sur le marché une très grande quantité de raccords rapides destinés à raccorder de façon étanche des tubes cylindriques à une tête de raccord rigide présentant une face frontale annulaire d'appui étanche. Le problème technique du raccord des sorties de pompes domestiques telles que les circulateurs de chauffage centrale n'est pas résolu de façon satisfaisante lorsqu'il s'agit de raccorder, à long terme, un tube cylindrique rigide, par exemple un tube mince en cuivre, susceptible de présenter divers diamètres, à une tête de raccord rigide et massive standard d'appareil hydraulique tel qu'un corps de pompe. Pour réaliser de tels raccords, il faut en général prévoir un raccord spécial pour chaque diamètre de tube rigide.

Le document US-A-3058762 décrit un raccord étanche entre un tube cylindrique et un corps de raccord le recevant dans son extrémité, dans lequel un joint est comprimé entre la face radiale de l'extrémité du corps de raccord et la paroi opposée d'un écrou vissé sur l'extrémité du corps de raccord, de sorte à venir en contact étanche avec la surface extérieure du tube cylindrique et avec la surface intérieure de l'écrou. En vissant l'écrou, une ou plusieurs rondelles coniques noyées dans le joint sont légèrement applaties de sorte que leur bord intérieur morde dans le tube cylindrique pour maintenir fermement ce dernier dans le raccord.

Le document DE-U-8629297.8 décrit un raccord étanche entre un tube cylindrique et un corps de raccord le recevant dans son extrémité, dans lequel un joint est mis en contact étanche avec la surface extérieure du tube cylindrique par compression entre la face radiale de son logement dans le corps de raccord et la face radiale opposée d'une bague susceptible d'être déplacée axialement par le vissage d'un écrou sur le corps de raccord par le biais d'une bague intermédiaire. En vissant l'écrou, les dents d'une bague intérieure pénètrent dans la surface extérieure du tube cylindrique en raison de la coopération de la surface extérieure conique de cette bague avec la surface intérieure conique de la bague intermédiaire.

La présente invention se propose de réaliser un dispositif de raccord pour différents diamètres de tube rigide à raccorder à une tête de raccord d'appareil hydraulique, tel qu'un raccord de refoulement de pompe, et qui comporte un seul type de pièce complexe d'enveloppe relativement onéreuse dénommée bague de retenue, pour les différents diamètres de tubes à raccorder et des pièces internes relativement peu onéreuses et adaptées à différents diamètres extérieurs des tubes à raccorder.

A cet effet, selon l'invention, le dispositif de raccord pour liaison étanche entre un tube à surface extérieure cylindrique et un corps de raccord rigide muni de moyens extérieurs de retenue comporte une bague interne en matériau élastomère, une bague intermédiaire en matériau rigide, une bague externe de retenue sur le corps de raccord, ces trois bagues étant concentriques et présentant entre elles des surfaces de contact tronconiques, ladite bague intermédiaire étant munie, à l'extrémité de petit diamètre de sa partie tronconique, de moyens d'accrochage susceptibles de coopérer avec le tube, et ladite bague externe de retenue présentant, à la base de grand diamètre de sa partie tronconique, des moyens intérieurs de retenue, susceptibles de coopérer avec le corps de raccord, caractérisé en ce que ladite bague interne présente, d'une part à la base de grand diamètre de sa partie tronconique au moins une nervure annulaire d'étanchéité en saillie coopérant avec une face d'étanchéité annulaire plane de la tête de raccord et, d'autre part, à la périphérie de la base de sa partie tronconique, une collerette en saillie, sur laquelle s'appuie la surface frontale arrière de la bague intermédiaire.

Le raccord ainsi obtenu, tout en étant relativement économique à fabriquer en une gamme de raccords adaptables à différents diamètres de tube, assure, avec de grandes facilités de mise en place, un accrochage axial énergique et persistant sur le tube cylindrique qui est à la fois serré radialement par la bague en élastomère et griffé par la bague de retenue. Une telle disposition de serrage et de retenue garantit un excellent amortissement du tube cylindrique, ce qui se révèle précieux pour les tubulures d'appareils domestiques tels que les chaudières de chauffage à circulateur intégré qui doivent être très silencieuses pendant une longue période de service alors qu'elles présentent des longueurs de tubes de cuivre minces aptes à vibrer sous l'effet d'excitation des circulations hydrauliques. Pour de tels appareils, le dispositif de raccord selon l'invention assure un amortissement parfait des excitations en bout de tube, avec un accrochage puissant des tubes qui, malgré cet accrochage, ne peuvent alors pas être excités en vibration par des corps vibrants tels que des corps de pompe.

Selon un autre mode de réalisation, la bague en élastomère comporte, à la périphérie de la base de sa partie tronconique, une collerette en saillie sur laquelle la surface frontale de grand diamètre de la bague de serrage est susceptible de s'appuyer. Cette disposition permet d'arrêter l'effort de serrage axial sur une butée en élastomère propre à étouffer les vibrations que le corps de raccord pourrait transmettre au tube à raccorder. La base de cette partie tronconique de la bague en élastomère comporte de préférence au moins une nervure annulaire en saillie, apte à améliorer l'étanchéité de contact entre ladite face frontale et la face frontale annulaire plane du corps de raccord. On obtient ainsi une étanchéité parfaite et susceptible de persister pendant des années au contact entre la bague en élastomère et le corps de raccord.

Selon un autre mode de réalisation de l'invention, les moyens de blocage de la bague intermédiaire de serrage sont constitués par une partie rabattue vers le centre de la bague de serrage. La partie rabattue vers le centre de la bague de serrage comporte, à son extrémité intérieure, des griffes séparées aptes à s'engager chacune radialement dans la paroi extérieure du tube à raccorder.

Selon encore un autre mode de réalisation de l'invention, les moyens intérieurs de retenue de la bague externe sont constitués d'un élément d'un système de couplage par vissage choisi dans le groupe comprenant les systèmes à vis-écrou, les systèmes à rampe et ergot, par exemple une rampe circulaire propre à obliger, au cours de la rotation de montage du dispositif de raccord sur le corps de raccord, ledit dispositif de raccord à effectuer un déplacement axial en direction dudit corps de raccord pour comprimer la bague en élastomère axialement sur la face frontale annulaire du corps de raccord et, par effet hydrostatique, radialement sur la surface extérieure du tube à raccorder. La bague de serrage présente une fente axiale dont les deux bords libres sont susceptibles de se rapprocher au cours du serrage par la bague de retenue qui la repousse en direction du corps de raccord, ou bien la bague de serrage comporte sur sa partie conique au moins un pli ou ondulation d'orientation axiale par rapport à ladite surface tronconique.

Lorsque le dispositif de raccord selon l'invention est destiné à être appliqué à des tubes à raccorder de diamètres extérieurs différents, on peut créer selon l'invention une gamme de dispositifs de raccord destinés à raccorder des tubes cylindriques de diamètres extérieurs différents, tous les types de raccord de la gamme comportent alors la même bague externe de retenue, la bague interne en élastomère et la bague intermédiaire de serrage étant chacune adaptées au diamètre extérieur du tube cylindrique à raccorder et aux dimensions du corps de raccord.

D'autres buts, avantages et caractéristiques apparaîtront à la lecture de la description de divers modes de réalisation de l'invention, faite à titre non limitatif et en regard du dessin annexé, dans lequel:
- la figure 1 représente en coupe axiale un dispositif de raccord étanche selon l'invention monté entre un tube cylindrique mince et une tête de raccord de refoulement de pompe;
- la figure 2 représente en vue en bout, à l'état libre et avant montage en position, la bague intermédiaire de serrage prévue à l'intérieur du dispositif de raccord étanche selon l'invention;
- la figure 3 représente à l'état libre, pour moitié en coupe axiale et pour moitié en vue extérieure en élévation, la bague interne en élastomère prévue à l'intérieur du dispositif de raccord étanche selon l'invention;
- les figures 4 et 5 représentent, en coupe axiale comme à la figure 1 mais à plus petite échelle, le dispositif de raccord étanche selon l'invention appliqué respectivement au montage d'un tube cylindrique de petit diamètre et d'un tube cylindrique du plus grand diamètre admissible;
- les figures 6 et 7 représentent en élévation et en perspective des variantes de réalisation de la bague intermédiaire de serrage représentée à la figure 2 et qui permettent d'exercer un serrage radial plus important.

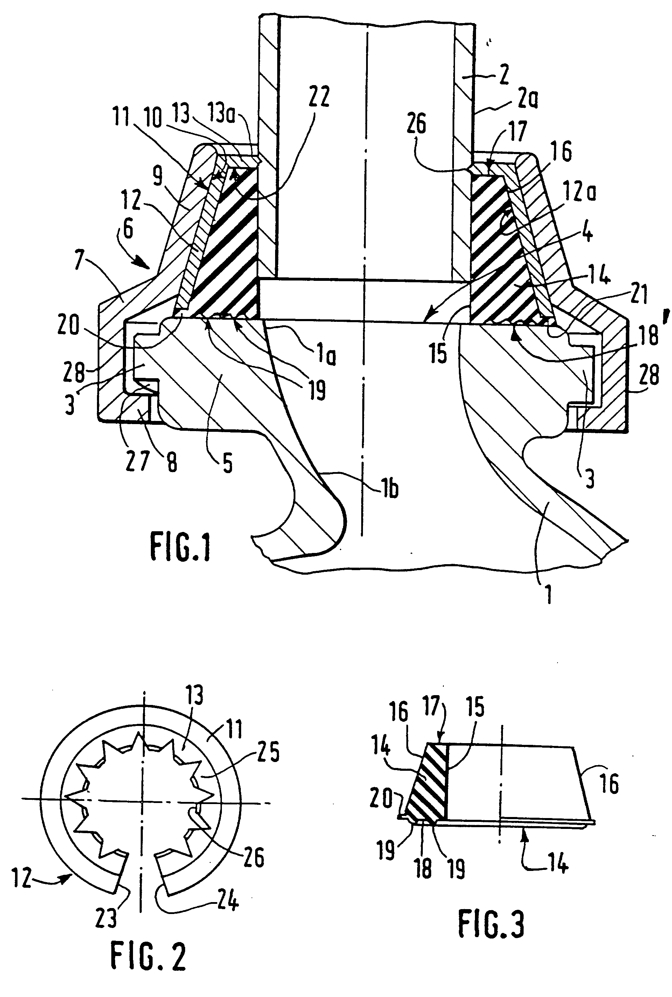

Le dispositif de raccord étanche représenté en coupe axiale sur la figure 1 est destiné à raccorder le débouché la d'une canalisation 1b ménagée dans une tête de raccord rigide 1, par exemple un raccord de refoulement de corps de pompe, à un tube 2 à surface extérieure cylindrique, par exemple un tube de cuivre étiré à paroi mince. La tête de raccord 1 présente, de façon classique, des moyens extérieurs de retenue 3, et une face frontale annulaire plane 4 de raccordement étanche. Les moyens de retenue 3 sont prévus sur la périphérie d'un corps de raccord rigide et massif 5 dont la face terminale est constituée par la face 4. Ils peuvent être constitués comme ici par des tronçons de rampe circulaire mais aussi par un filetage extérieur, l'important sur le plan fonctionnel étant qu'ils imposent au montage un déplacement axial dans la direction de la face.

Le dispositif de raccord 6 comporte extérieurement une bague de retenue 7 relativement massive et qui est équipée à une extrémité de moyens de retenue intérieurs 8 qui sont conjugués des moyens extérieurs 3 du corps de raccord 5, par exemple des tronçons de rampe conique quart-de-tour pour permettre une fixation en pression axiale sur le corps 5 de raccord rigide. Dans la direction opposée aux moyens de retenue intérieurs 8, la bague de retenue 7 présente une partie en tronc de cône 9 s'effilant vers l'extérieur et qui forme une surface tronconique intérieure 10 coopérant avec la surface tronconique extérieure conjuguée 11 d'une bague intermédiaire de serrage 12. La bague de serrage 12 qui présente une grande capacité de déformation radiale est réalisée en un matériau rigide de faible épaisseur, par exemple en tôle d'acier et présente, du côté effilé du cône, une partie de rebord annulaire 13 qui est rabattue vers le centre et dont le bord intérieur 13a, présentant le cas échéant une forme tranchante, presse en position de montage telle que représentée à la figure 1, la surface extérieure 2a du tube 2 à raccorder. A la place de la partie de rebord annulaire 13, on pourrait prolonger le côté effilé du cône de la bague de serrage 12 en direction de l'extérieur et du tube 2, jusqu'à venir en appui directement sur la surface extérieur du tube 2.

Le dispositif de raccord 6 comporte, à l'intérieur de la bague de serrage 12, une bague interne tronconique 14 en un matériau élastomère. La bague 14 présente un passage central cylindrique 15 qui, en position sans contrainte telle que représentée à la figure 3, présente un diamètre voisin (avec un léger écart en plus ou en moins selon les tolérances et/ou le degré de serrage hydrostatique souhaité) de celui du diamètre extérieur du tube à raccorder 2. La surface extérieure tronconique 16 de la bague 14 correspond à la surface tronconique intérieure 12a de la bague de serrage 12 et la face d'extrémité effilée 17 coopère avec la face intérieure 22 du rebord annulaire 13. La bague élastomère 14 présente, sur son côté large, une face frontale annulaire d'étanchéité 18 de forme générale plane. Au repos, en position détendue comme représenté à la figure 3, la face 18 d'étanchéité sur la face annulaire plane 4 de la tête de raccord 1 comporte au moins une nervure annulaire 19 en saillie, à section transversale arrondie ou en triangle. On a prévu, sur le mode de réalisation représenté, deux nervures annulaires 19 concentriques à section transversale en triangle.

La surface frontale d'étanchéité 18 se prolonge à sa périphérie par une collerette en saillie 20 sur laquelle s'appuie la surface frontale arrière 21 de grand diamètre de la bague de serrage 12, en confirmant l'application de la surface 18 sur la face 4. La paroi intérieure 22 de la partie 13 rabattue vers l'intérieur présente, de préférence, une forme générale plane apte à coopérer avec au moins une partie de la face frontale d'extrémité 17 de petit diamètre de la bague en élastomère 14 et vient ainsi confirmer la pression axiale de cette bague 14 sur la face frontale annulaire 4.

On a représenté sur la figure 2 1a bague de serrage 12 à l'état complètement détendu, avant son introduction dans la bague de retenue 7. On remarque qu'elle est fendue sur sa surface tronconique 11 et sur sa partie 13 rabattue vers l'intérieur, en formant des bords 23 et 24 qui se rapprochent sans se toucher complètement à l'intérieur de la bague de retenue 7 montée telle que représentée à la figure 1. Afin d'assurer un meilleur accrochage de la bague de serrage 12 sur le tube 2 à raccorder, la surface rabattue ou de rebord 13 se termine, à son extrémité intérieure, par des griffes ou dents 25 à extrémité tranchante 26 (correspondant au bord intérieur 13a représenté à la figure 1) qui pénètrent dans la paroi du tube 2 d'une faible longueur (de 1 à 0,1 mm) lorsque la partie rabattue 13 est repoussée vers le centre par la paroi conique intérieure 10 de la bague de retenue 7. Dans le mode de réalisation représenté à la figure 1, les moyens de retenue ou ergots 3 comportent des rampes 27 en forme de segments annulaires et qui coopèrent avec les moyens de retenue ou rebords 8 pour provoquer un déplacement axial forcé de la bague de retenue 7 à l'encontre de la réaction de la bague en élastomère 14 en appui par sa face 18 sur la face 4 du corps de raccord 5, cette réaction étant transmise par la bague de serrage 12 à la surface conique 10. Une rampe en segments circulaires peut être également prévue sur le rebord 8 pour coopérer avec la rampe 27 ou bien pour remplacer celle-ci.

Le montage du dispositif de raccord selon l'invention est réalisé de la façon suivante. Le dispositif de raccord 6 se présente équipé de la bague de serrage 12 non serrée et qui porte la bague en élastomère 14 non comprimée, c'est-à-dire avec sa petite face d'extrémité 17 placée à distance de la partie rabattue 13. Le tube à raccorder 2 est alors introduit dans la bague en élastomère 14 en traversant le cercle des dents 26 non serrées qui dégage un diamètre légèrement supérieur à celui du diamètre extérieur du tube 2. Après la traversée de la partie rabattue 13, le tube 2 s'introduit dans l'alésage 15 de la bague en élastomère 14, en agrandissant légèrement cet alésage lorsque celui-ci présente un diamètre inférieur au diamètre extérieur, du tube 2. Pour réaliser le montage du dispositif de raccord 6 dans lequel est alors engagé le tube à raccorder 2, sur le corps de raccord rigide 5, on vient pousser axialement la bague de retenue 7 en direction du corps de raccord 5 afin de presser la face frontale annulaire d'étanchéité 18 sur la face frontale annulaire plane 4 du corps 5, ce qui repousse, par la collerette en saillie 20 alors fortement comprimée, la bague de serrage 12 vers le fond étroit du tronc de cône 9. La bague de serrage fendue 12 se resserre alors et le bord intérieur à denture tranchante 13a du rebord annulaire 13 pénètre sur une faible profondeur dans la paroi de surface extérieure 2a du tube à raccorder 2 en ancrant axialement celui-ci par rapport à la bague de serrage 12.

En réduisant son diamètre de surface conique par rapprochement des bords 23 et 24 de la fente, la bague de serrage 12 comprime l'élastomère de la bague 14 de façon pratiquement hydrostatique car l'élastomère est confiné de toute part sauf entre les dents 25 où, du fait de la cohésion de l'élastomère, il ne peut se produire qu'un léger bombement vers l'extérieur de la matière élastomère de la bague (bombement qui ne peut en aucune façon compenser la réduction de volume de l'élastomère). En conséquence de cette réduction de volume, l'élastomère de la bague 14 exerce une forte pression annulaire sur la paroi extérieure 2a du tube 2, ce qui assure l'étanchéité entre ce dernier et la bague 14, même si, à l'état détendu de cette dernière, son alésage 15 présente un diamètre légèrement supérieur au diamètre extérieur du tube à raccorder 2. Bien entendu, le tube 2 qui peut être métallique (par exemple en cuivre) mais aussi en matières plastiques de diverses rigidités (depuis le polyvinyle très mou, via le polyéthylène relativement mou jusqu'aux polyesters les plus durs), doit présenter une surface extérieure lisse pour confirmer l'étanchéité. Sur la face frontale annulaire 18 de la bague élastomère 14, les nervures annulaires 19 sont repoussées vers l'intérieur de la masse de l'élastomère en assurant sur la face annulaire plane 4 deux lignes à forte pression garantissant l'étanchéité entre le corps de raccord 5 et la bague en élastomère 14, même dans le cas général où le corps 5 y compris la face 4 de raccordement étanche est brut de fonderie et présente de petites irrégularités de surface.

Après avoir pressé axialement la bague externe de retenue 7, on veille à l'introduction des moyens de retenue 8 entre les interruptions des moyens extérieurs de retenue ou rampes 3. On peut alors faire tourner à force, par exemple à l'aide d'une clé plate dont les branches latérales en fourche sont en appui sur des pans 28 de la bague de retenue 7 (par exemple un six pans ménagé en périphérie extrême de la bague de retenue massive 7), pour verrouiller les organes de retenue intérieurs 8 sur les moyens de retenue ou rampes 3 de la tête de raccord 11. Cette rotation provoque un rapprochement supplémentaire entre la partie en tronc de cône 9 et le corps de raccord rigide 5 et donc une compression supplémentaire de l'élastomère de la bague 14 et une pénétration supplémentaire des dents 25 dans la paroi du tube à raccorder 2, ce qui confirme l'ancrage axial du tube 2 ainsi que l'étanchéité aux fluides entre le tube 2 et la bague 14 d'une part, et entre cette bague 14 et le corps de raccord 5 d'autre part. En fin de rotation d'accrochage de la bague de retenue 7 par rapport au corps de raccord 5, on peut prévoir des moyens réciproques de verrouillage, par exemple par coopération d'un creux ménagé sur la surface de rampe 27 et d'une saillie conjuguée ménagée sur les moyens de retenue 8, ou l'inverse.

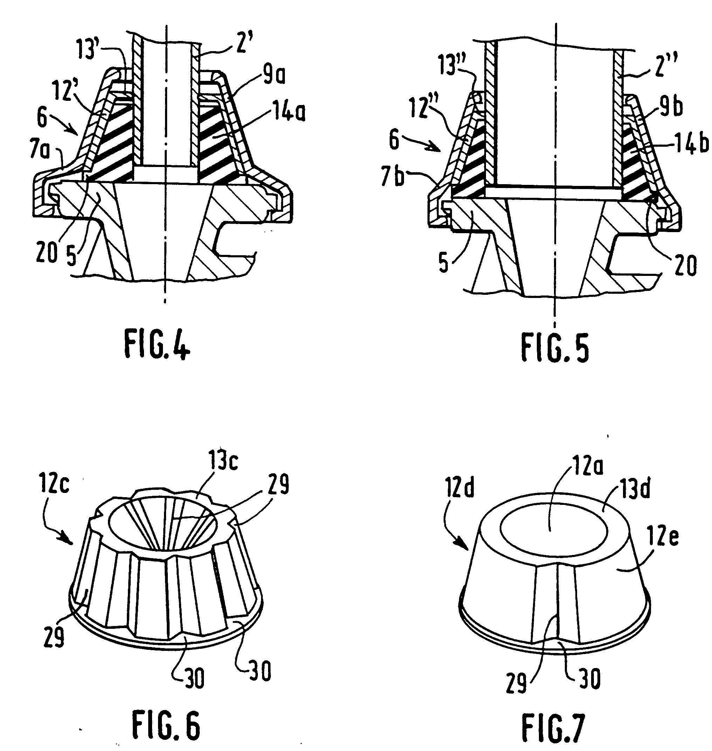

Sur les figures 4 et 5 on a représenté, à plus petite échelle qu'à la figure 1, respectivement le montage d'un tube cylindrique 2' de petit diamètre par rapport au tube 2 de la figure 1 et d'un tube cylindrique 2" du plus grand diamètre admissible. Les éléments identiques à ceux de la figure 1 portent les mêmes numéros de référence qu'à la figure 1.

On constate qu'il s'agit de raccorder, sur un même corps de raccord rigide 5, des tubes 2' et 2" de diamètres très différents. Le dispositif de raccord 6 comporte en général la même bague de retenue 7. On a représenté sur les figures 4 et 5 des bagues de retenue 7a et 7b, légèrement différentes, pour illustrer les cas limites possibles avec le dispositif de raccord selon l'invention, mais sur le plan économique, il paraît plus avantageux d'utiliser une bague de retenue massive standard (pièce de fonderie ou pièce métallique emboutie). Les bagues de serrage 12' et 12" présentent sensiblement la même surface conique extérieure mais des parties de rebord annulaire 13' et 13", adaptées à chacun des tubes 2, respectivement de petit diamètre 2' et de diamètre maximal 2". Les bagues en élastomère 14a et 14b ne présentent qu'une partie sensiblement identique, à savoir la collerette en saillie 20 qui retient l'extrémité de grand diamètre de la bague de retenue 12.

Sur les figures 6 et 7, on a représenté en perspective des bagues de serrage 12c et 12d réalisées en tôle de faible épaisseur mais qui présentent néanmoins une bonne rigidité radiale et axiale. Dans le mode de réalisation représenté à la figure 6, le corps conique de la bague de serrage 12c comporte des rainures axiales 29 orientées selon la pente des cônes et qui débouchent chacune sur une partie de rebord 30 destinée à venir presser la collerette en saillie 20 de la bague en élastomère 14. Le rebord 13c qui n'est pas muni à son arête d'extrémité intérieure de dents ou griffes, est susceptible de subir une légère contraction radiale qui lui permet d'ancrer axialement le tube 2 à assembler.

Dans le mode de réalisation de la bague de serrage 12d représenté sur la figure 7, une seule rainure axiale 29 est prévue avec un rebord 30 et est raccordée à une surface conique 12e qui correspond à l'alésage conique 11 de la partie en tronc de cône 9 de la bague de retenue 7. La bague de serrage 12d est habituellement réalisée dans une tôle de plus forte épaisseur que la bague de serrage 12c et sa surface conique intérieure 12a coopère avec la surface conique extérieure 16 de la bague en élastomère 14.

On doit comprendre que les rainures axiales 29 n'ont pas seulement pour fonction de donner de l'élasticité radiale aux bagues de serrage 12c et 12d mais qu'elles assurent également l'immobilisation en rotation de la bague en élastomère 14 qui peut comporter ou non, sur sa face extérieur tronconique 16, des rainures correspondantes des rainures 29.

## Revendications

1. Dispositif de raccord pour liaison étanche entre un tube (2) à surface extérieure cylindrique et un corps de raccord rigide (1, 5) muni de moyens extérieurs de retenue (3), le dispositif comprenant une bague interne (14) en matériau élastomère, une bague intermédiaire (12) en matériau rigide, une bague externe (7) de retenue sur le corps de raccord (1, 5), ces trois bagues étant concentriques et présentant entre elles des surfaces de contact tronconiques, ladite bague intermédiaire (12) étant munie, à l'extrémité de petit diamètre de sa partie tronconique, de moyens d'accrochage (13) susceptibles de coopérer avec le tube (2), et ladite bague externe de retenue (7) présentant, à la base de grand diamètre de sa partie tronconique, des moyens intérieurs de retenue (8), susceptibles de coopérer avec le corps de raccord (1, 5), caractérisé en ce que ladite bague interne (14) présente, d'une part à la base (18') de grand diamètre de sa partie tronconique au moins une nervure annulaire d'étanchéité en saillie (19) coopérant avec une face d'étanchéité annulaire plane (18) de la tête de raccord (1) et, d'autre part, à la périphérie de la base (18) de sa partie tronconique, une collerette (20) en saillie, sur laquelle s'appuie la surface frontale arrière (21) de la bague intermédiaire (12).

2. Dispositif selon la revendication 1, caractérisé en ce que la bague intermédiaire (12) présente une fente axiale (23, 24).

3. Dispositif selon la revendication 1 ou 2, caractérisé en ce que la bague intermédiaire (12) comporte sur sa partie conique au moins un pli ou ondulation (29) d'orientation axiale par rapport à ladite surface tronconique (11).

4. Gamme de dispositifs de raccord selon l'une quelconque des revendications 1 à 3, destinés à raccorder des tubes cylindriques de diamètres extérieurs différents, caractérisée en ce que tous les types de raccord de la gamme comportent la même bague externe de retenue (7), la bague interne en élastomère (14) et la bague intermédiaire (12) étant chacune adaptées au diamètre extérieur du tube cylindrique à raccorder (2).

## Claims

1. A coupling device for a fluid-tight connection between a tube (2) with an outer cylindrical surface and a rigid coupling body (1, 5) provided with outer retaining means (3), said device comprising an inner ring (14) in an elastomer material, an intermediate ring (12) in a rigid material, an outer ring (7) for retention on the said connector body (1, 5), these three rings being concentric and having frusto-conical contact surfaces between each other, said intermediate ring (12) being provided, at the small diameter end of its frusto-conical portion, with engaging means (13) designed to co-operate with said tube (2), and said outer retaining ring (7) having, at the major diameter base of its frusto-conical portion, inner retaining means (8), adapted to co-operate with said connector body (1, 5), characterised in that said inner ring (14) has, firstly, at said major diameter base (18) of its frusto-conical portion at least one projecting annular sealing rib (19) co-operating with a flat annular sealing face (18) of the coupling head (1) and, secondly, at the periphery of said base (18) of its frusto-conical portion, a small projecting collar (20), on which the rear end surface (21) of said intermediate ring (12) bears.

2. The device according to claim 1, characterised in that said intermediate ring (12) has an axial slot (23, 24).

3. The device according to claim 1 or 2, characterised in that said intermediate ring (12) has, on its conical portion, at least one fold or undulation (29) oriented axially with respect to said frusto-conical surface (11).

4. A range of coupling devices according to any one of claims 1 to 3, for connecting cylindrical tubes of different outer diameters, characterised in that all the types of coupler of the range include the same outer retaining ring (7), said inner elastomer ring (14) and intermediate ring (12) each being adapted to the outer diameter of a cylindrical tube to be coupled (2).

## Patentansprüche

1. Verbindungsvorrichtung zur dichten Verbindung eines Rohrs (2) mit zylindrischer Außenfläche mit einem mit äußeren Rückhaltemittel (3) versehenen starren Verbindungskörper (1,5), wobei die Vorrichtung einen Innenring (14) aus elastomerischen Material, einen Zwischenring (12) aus starrem Material und einen auf dem Verbindungskörper (1,5) befindlichen rückhaltenden Außenring (7) umfasst, wobei diese drei Ringe konzentrisch sind und dazwischen kegelstumpfartigen Anlagefläche aufweisen, wobei der Zwischenring (12) an dem Ende mit kleinem Durchmesser seines kegelstumpfartigen Teils mit Mitnahmemitteln (13) versehen ist, welche mit dem Rohr (2) zusammenwirken können, und wobei der rückhaltende Außenring (7) an der Grundfläche seines Regelstumpfartigen Teils mit großem Durchmesser rückhaltende Mittel (8) aufweist, die mit dem Verbindungskörper (1,5) zusammenwirken können,
dadurch gekennzeichnet, daß der Innenring (14) einerseits auf der Grundfläche (18) seines kegelstumpfartigen Teils mit großen Durchmesser mindestens eine hervorragende kreisförmige Dichtungsrippe (19), die mit einer ringförmigen ebenen Dichtungsfläche (18) des Verbindungskörpers (1) zusammenwirkt und anderseits an dem Grundflächenrand (18) seines kegelstumpfartigen Teils einen hervorragenden Flansch, auf den sich die Rückstirnfläche (21) des Zwischenringes (12) stützt, aufweist.

2. Vorrichtung nach Anspruch 1, dadurch gekennzeichnet, daß der Zwischenring (12) einen axialen Spalt (23, 24) aufweist.

3. Vorrichtung nach Anspruch 1 oder 2 , dadurch gekennzeichnet, daß der Zwischenring (12) auf seinem kegelstumpfartigen Teil mindestens einen Wulst oder eine Welle (29) mit axialer Orientierung bezüglich der kegelstumpfartigen Fläche umfasst.

4. Satz von Verbindungsvorrichtungen nach einem der Ansprüche 1 bis 3 für die Verbindung zylindrischer Rohre mit verschiedenen Außendurchmessern, dadurch gekennzeichnet, daß alle Verbindungsausführungen des Satzes den gleichen rückhaltenden Außenring (7) umfassen, wobei der Innenring (14) aus Elastomer und der Zwischenring (12) jeweils dem Außendurchmesser des anzuschließenden zylindrischen Rohres (2) angepaßt ist.
